Europäisches Patentamt

European Patent Office

Office européen des brevets

(11) Veröffentlichungsnummer: **0 036 099**

**A1**

# (12) EUROPÄISCHE PATENTANMELDUNG

(21) Anmeldenummer: 81101242.6

(22) Anmeldetag: 21.02.81

(51) Int. Cl.³: **G 02 B 27/10**
 **F 41 G 3/06**

(30) Priorität: 15.03.80 DE 3010028

(43) Veröffentlichungstag der Anmeldung:
 23.09.81 Patentblatt 81/38

(84) Benannte Vertragsstaaten:
 CH IT LI NL

(71) Anmelder: **Firma Carl Zeiss**
 **Postfach 1369 1380**
 **D-7082 Oberkochen(DE)**

(72) Erfinder: **Stana, Hans, Ing. grad.**
 **Katzenbachstrasse 24**
 **D-7082 Oberkochen(DE)**

(72) Erfinder: **Schwarz, Martin, Ing. grad.**
 **Haselstrauch 3**
 **D-7082 Oberkochen(DE)**

(72) Erfinder: **Simon, Karl-Heinz, Dr.**
 **Am Espenrain 5**
 **D-7082 Oberkochen(DE)**

(54) **Spiegel- und Prismenkombination zur Harmonisierung optischer Achsen.**

(57) Bei Feuerleitsystemen sind zur Erreichung einer hohen Schußgenauigkeit Winkelfehler zwischen den optischen Achsen des visuellen Visiergerätes und des Laser-Entfernungsmeßgerätes zu vermeiden und zwar auch bei starken Vibrationen, Schockeinwirkungen und Temperaturschwankungen. Es wird eine Spiegel- und Prismenkombination angegeben, welche die notwendige Harmonisierung der optischen Achsen gewährleistet. Bei dieser Kombination ist im Beobachtungsstrahlengang eine mehrteilige Prismenkombination (2) vorgesehen, die eine Strahlenteilerfläche (3) und eine teildurchlässige Spiegelschicht (4) enthält und auf der ein Umlenkprisma (2a) für den Lasersendestrahl (15) fest aufgekittet ist. Ein optischer Zielmarkenstrahlengang wird über die Spiegelschicht (4) in den Beobachtungsstrahlengang (14) umbelenkt, die Laserempfangsstrahlung (16) gelangt über die Teilerfläche (3) in den Zielmarkenstrahlengang und dort auf einen Empfänger.

Fig.1

## Spiegel- und Prismenkombination zur Harmonisierung optischer Achsen

Die Erfindung betrifft eine Spiegel- und Prismenkombination zur Harmonisierung optischer Achsen bei Feuerleitsystemen mit Laserentfernungsmeßgerät.

Bei derartigen Feuerleitsystemen sind für eine gute Schußgenauigkeit Winkelfehler zwischen der visuellen Visierlinie, dem Laser-Empfangsstrahl und dem Laser-Sendestrahl zu vermeiden.

Der Erfindung liegt deshalb die Aufgabe zugrunde, ein optisches System anzugeben, das eine Harmonisierung mehrerer optischer Achsen gestattet.

Diese Aufgabe wird erfindungsgemäß dadurch gelöst, daß im Beleuchtungs- und Zielmarkenstrahlengang eines optischen Beobachtungssystems mit Laserentfernungsmeßgerät ein Teilerwürfel vorgesehen ist, der auf der der Beleuchtungsquelle zugewandten Seite eine Zielmarke und senkrecht zum Zielmarkenstrahlengang auf einer anderen Würfelseite eine Lochblende trägt, daß im Beobachtungsstrahlengang eine mehrteilige Prismenkombination vorgesehen ist, die eine Spektralteilerfläche und eine teildurchlässige Spiegelschicht enthält, und auf das ein Umlenkprisma für den Lasersendestrahlengang befestigt ist, und daß ein richtungsinvariantes Reflexionselement für die Umlenkung der Zielmarkenstrahlung vorgesehen ist.

In einem zweckmäßigen Ausführungsbeispiel dient die mehrteilige Prismenkombination auch zur Verstellung der optischen Achsen in Seite und Höhe.

Die mehrteilige Prismenkombination kann ausgebildet sein aus zwei rechtwinkligen Prismen, die über eine planparallele Platte verkittet sind oder aus der Kombination von zwei rechtwinkligen mit einem Bauernfeind-Prisma.

Das richtungsinvariante Reflexionselement besteht zweckmäßigerweise aus einem Tripelprisma oder einem Tripelspiegel.

1 P 880 EP

Die mit der Erfindung erzielten Vorteile bestehen insbesondere darin, daß auch bei starken Vibrationen, Schockeinwirkungen und Temperaturschwankungen keine Winkelfehler zwischen den Achsen des Lasersende-, Laserempfangs-, Beobachtungs- und Zielmarkenstrahlenganges auftreten.

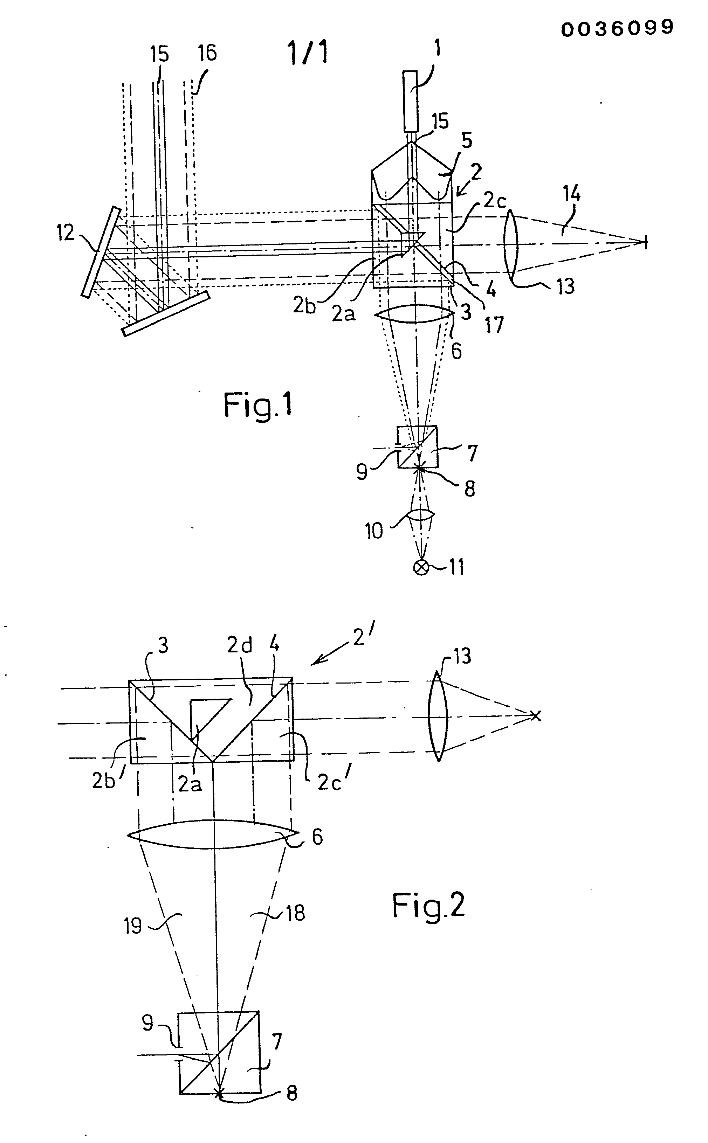

Die Erfindung wird im folgenden anhand der Fig. 1 und 2 der beigefügten Zeichnung näher erläutert. Im einzelnen zeigen:

Fig. 1    eine schematische Darstellung eines Ausführungsbeispiels der erfindungsgemäßen Prismenkombination.

Fig. 2    einen Ausschnitt aus einem anderen Ausführungsbeispiel der Prismenkombination.

In Fig. 1 ist mit 1 ein Lasersender bezeichnet, der Teil eines Entfernungsmeßgerätes ist. Eine im Beobachtungsstrahlengang angeordnete Prismenkombination trägt die Bezeichnung 2. Diese Kombination besteht aus den beiden rechtwinkligen Prismen 2b und 2c, zwischen die eine planparallele Platte 17 eingekittet ist. Mit dieser bildet das Prisma 2b eine Trennfläche 3, die als Spektralteilerfläche ausgebildet ist. Die Trennfläche 4 zwischen Platte 17 und Prisma 2c bildet einen teildurchlässigen Spiegel.

Mit der Prismenkombination 2 ist ein kleines Umlenkprisma 2a fest verbunden. Dieses lenkt den vom Lasersender 1 kommenden Strahlengang rechtwinklig um. Nach einer weiteren Umlenkung am Umlenkspiegel 12 geht diese Strahlung als Sendestrahl 15 zum anzumessenden Objekt.

Seitlich von der Prismenkombination 2 ist ein Spektralteilerwürfel 7 angeordnet. Dieser trägt bei 8 eine Zielmarke, die von der Lichtquelle 11 über einen Kondensor 10 beleuchtet wird. Mit 9 ist eine auf einer Seitenfläche des Würfels 7 angeordnete Blende bezeichnet. Die Entfernung der Zielmarke 8 vom Mittelpunkt des Würfels 7 ist damit gleich groß wie die Entfernung der Blende 9 vom Würfelmittelpunkt.

Der Lasersendestrahl 15 wird vom angemessenen Ziel als Strahlenbündel 16 reflektiert. Dieses gelangt über den Umlenkspiegel 12 auf die Spektralteilerfläche 3 der Prismenkombination 2 und wird von dort in Richtung des Spektralteilerwürfels 7 reflektiert. Mittels des mit 6 bezeichneten Objektivs wird der Empfangsstrahl in die Ebene der Blende 9 des Würfels 7 abgebildet. Hier ist ein nicht dargestellter Empfänger angeordnet, aus dessen Signal die Zielentfernung bestimmt wird.

Der von der beleuchteten Zielmarke 8 ausgehende Strahlengang wird durch das Objektiv 6 parallel gemacht und durchdringt die Spiegelschicht 4 der Prismenkombination. Er wird dann an einem Tripelprisma 5 reflektiert und gelangt schließlich über die Spiegelschicht 4 als Zielmarkenstrahlengang 14 zum Beobachter. Mittels des Gerätehauptobjektivs 13 wird die Zielmarke 8 in die Beobachtungsebene abgebildet. Das vom Ziel kommende Licht tritt durch die Prismenkombination 2 und wird mittels des Objektivs 13 in die Beobachtungsebene abgebildet.

Der Beobachter sieht ein Bild des Zieles, dem das Bild der Zielmarke 8 überlagert ist.

Durch die starre Verbindung der Prismenkombination 2 mit dem Umlenkprisma 2a ist erreicht, daß zwischen der optischen Achse des Beobachtungsstrahlenganges und der Achse des Lasersendestrahles 15 keine Winkelfehler auftreten können. Durch die geschilderte Anordnung der Blende 9 und der Zielmarke 8 am Spektralteilerwürfel 7 ist auch erreicht, daß zwischen der Achse der Zielmarkenabbildung und der Laserempfangsstrahlung 16 kein Winkelfehler auftritt.

Durch die dargestellte Prismenkombination ist also für die Achsen des Lasersende-, Laserempfangs-, Beobachtungs- und Zielmarkenstrahlenganges eine Harmonisierung erreicht.

Die Prismenkombination 2 dient auch zur Verstellung der genannten Achsen in Höhe und Seite, wobei diese Verstellung manuell, rechnergesteuert oder mit anderen herkömmlichen Verstellmöglichkeiten durchgeführt werden kann.

Bei dem in Fig. 2 dargestellten Ausführungsbeispiel übernimmt die Prismenkombination 2' die Aufgaben der Prismenkombination in Fig. 1. Die Kombination 2' besteht aus den beiden Prismen 2b' und 2c', zwischen denen ein Bauernfeind-Prisma 2d angeordnet ist. Die Spektralteilerfläche ist wieder mit 3, die teildurchlässige Spiegelfläche mit 4 bezeichnet. Die übrigen optischen Elemente sind identisch mit denen des Beispiels der Fig. 1.

Der von der Zielmarke 8 ausgehende Strahlengang 18 wird hier von der Spiegelfläche 4 direkt in den Beobachtungsstrahlengang umgelenkt. Die Spektralteilerfläche lenkt den Laserempfangsstrahlengang um und führt ihn als Strahlengang 19 durch das Objektiv 6 zur Blende 9.

0036099

Patentansprüche

1. Spiegel- und Prismenkombination zur Harmonisierung optischer Achsen bei Feuerleitsystemen mit Laserentfernungseßgerät, dadurch gekennzeichnet, daß im Beleuchtungs- und Zielmarkenstrahlengang eines optischen Systems ein Teilerwürfel (7) vorgesehen ist, der auf der der Lichtquelle zugewandten Seite eine Zielmarke (8) und senkrecht zum Zielmarkenstrahlengang auf einer anderen Würfelseite eine Lochblende (9) trägt, daß im Beobachtungsstrahlengang eine mehrteilige Prismenkombination vorgesehen ist, die eine Spektralteilerfläche (3) und eine teildurchlässige Spiegelschicht (4) enthält, und auf der ein Umlenkprisma (2a) für den Lasersendestrahlengang (15) befestigt ist, und daß ein richtungsinvariantes Refelxionselement (5) für die Umlenkung der Zielmarkenstrahlung vorgesehen ist.

2. Spiegel- und Prismenkombination nach Anspruch 1, dadurch gekennzeich net, daß die mehrteilige Prismenkombination (2) aus zwei über eine planparallele Platte (7) verkitteten rechtwinkligen Prismen (2b,2c) besteht.

3. Spiegel- und Prismenkombination nach Anspruch 1, dadurch gekennzeichnet, daß die mehrteilige Prismenkombination (2') aus zwei rechtwinkligen (2b',2c') und einem Bauernfeind-Prisma (2d) besteht.

4. Spiegel- und Prismenkombination nach Anspruch 1, 2 oder 3, dadurch gekennzeichnet, daß das richtungsinvariante Reflexionselement (5) aus einem Tripelprisma besteht.

0036099

Fig.1

Fig.2

1 P 88 D E

0036099

**Europäisches Patentamt**

## EUROPÄISCHER RECHERCHENBERICHT

EP 81 10 1242.6

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 714 412 (SIEMENS AG) <br> * Anspruch 1 * <br> -- | 1,4 |
| | CH - A - 503 259 (ELTRO GMBH & CO.) <br> * Spalte 2, Zeilen 1 bis 14 * <br> -- | 1 |
| A | DE - B2 - 2 536 878 (SIEMENS AG) <br> * Spalte 1, Zeilen 35 bis 42 * <br> -- | 1 |
| A | DE - A - 1 547 248 (DECCA LTD.) <br> * Anspruch 7 * <br> ---- | |

**KLASSIFIKATION DER ANMELDUNG (Int. Cl.³)**

G 02 B 27/10
F 41 G 3/06

**RECHERCHIERTE SACHGEBIETE (Int. Cl.³)**

F 41 G 1/00
F 41 G 3/06
G 01 C 3/00
G 02 B 5/04
G 02 B 23/00
G 02 B 27/10

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

☒ Der vorliegende Recherchenbericht wurde für alle Patentansprüche erstellt.

| Recherchenort | Abschlußdatum der Recherche | Prüfer |
|---|---|---|
| Berlin | 14-04-1981 | BOTTERILL |

EPA form 1503.1 06.78